# EUROPEAN PATENT APPLICATION

(11) **EP 3 413 620 A1**
(43) Date of publication of application: **12.12.2018**
(21) Application number: 16891936.3
(22) Date of filing: 29.02.2016
(51) Int. Cl.: H04W 28/20, H04L 12/26

(54) **VIDEO OPTIMIZATION METHOD, USER EQUIPMENT UNIT AND NETWORK EQUIPMENT UNIT**

(71) Applicant: Huawei Technologies Co., Ltd., Longgang District Shenzhen, Guangdong 518129 (CN)
(72) Inventor: CHEN, Jun, Shenzhen Guangdong 518129 (CN); LI, Zhiming, Shenzhen Guangdong 518129 (CN); JI, Li, Shenzhen Guangdong 518129 (CN)
(74) Representative: Epping - Hermann - Fischer
(86) International application number: PCT/CN2016/074812
(87) International publication number: WO 2017/147743

(57) **Abstract**

Embodiments of the present invention provide a video optimization method, user equipment, and a network device. The method includes: sending, by a network device, first indication information to user equipment (UE), where the first indication information is used to instruct the UE to send a video mean opinion score (MOS) of the UE to the network device, and the video MOS is used to represent a current video quality level; and receiving, by the network device, the video MOS sent by the UE. In this way, video quality can be radically optimized, and user experience is improved.

## Description

### TECHNICAL FIELD

Embodiments of the present invention relate to communications technologies, and in particular, to a video optimization method, user equipment, and a network device.

### BACKGROUND

Currently, as types of services provided by an operator for a user are diversified, life of the user becomes more convenient. The user can use a voice service, a video service, an Internet access service, or the like by using an operator network.

In the prior art, when the user uses the video service, that is, when the user watches a video by using the operator network, the user usually sends, by using user equipment (User Equipment, UE for short) and a network device, a quality of experience (Quality of Experience, QoE for short) parameter obtained when currently watching the video to a video server, so that the video server learns of current video quality and user experience. When user experience is poor, the video server may use a video optimization manner, such as adjusting a video format, to avoid video stalling or the like, and improve user experience.

However, the video optimization manner in the prior art has a poor video optimization effect and still cannot meet a user experience requirement.

### SUMMARY

Embodiments of the present invention provide a video optimization method, user equipment, and a network device, to resolve a technical problem that a video optimization manner in the prior art has a poor video optimization effect and user experience is relatively poor.

According to a first aspect, an embodiment of the present invention provides a video optimization method, where the method may include:
sending, by a network device, first indication information to user equipment (UE), where the first indication information is used to instruct the UE to send a video mean opinion score (MOS) of the UE to the network device, and the video MOS is used to represent a current video quality level; and
receiving, by the network device, the video MOS sent by the UE.

According to the video optimization method provided in the first aspect, the network device sends the first indication information to the UE, so that the UE can send the video MOS of the UE to the network device based on the first indication information. Therefore, the network device can learn of the video MOS of the UE, and further learn of in a timely manner, based on the current video quality level represented by the video MOS, video quality and user experience when a user uses a video service by using the UE. In this way, when the video quality is relatively poor, that is, when user experience is relatively poor, the network device can radically optimize the video quality, so as to avoid video stalling. Therefore, the video quality is ensured, and user experience is improved.

Further, in a possible implementation of the first aspect, after the receiving, by the network device, the video MOS sent by the UE, the method further includes:
controlling, by the network device based on the video MOS, a current network resource occupied by a video.

According to the video optimization method provided in this possible implementation, after receiving the video MOS sent by the UE, the network device may further decrease a quantity of UEs that access a network, to ensure network resource occupancy of the UE that is using the video service, and prevent the UE that is using the video service from encountering video stalling. Therefore, the video quality is ensured, and user experience is improved.

Further, in a possible implementation of the first aspect, after the receiving, by the network device, the video MOS sent by the UE, the method further includes:
sending, by the network device, minimization of drive tests (MDT) measurement control information to the UE; and
receiving, by the network device, an MDT measurement report sent by the UE.

According to the video optimization method provided in this possible implementation, after receiving the video MOS sent by the UE, the network device may further obtain a current MDT drive test report of the UE by instructing the UE to perform an MDT drive test, so that the network device can determine, based on the MDT drive test report, a reason why the video quality of the UE is poor. In this way, the network device can accordingly perform video optimization based on the reason why the video quality is poor, so as to avoid video stalling. Therefore, the video quality is ensured, and user experience is improved.

Optionally, in a possible implementation of the first aspect, before the sending, by a network device, first indication information to user equipment (UE), the method further includes:
receiving, by the network device, capability indication information sent by the UE, where the capability indication information is used to indicate to the network device that the UE has a capability of sending the video MOS to the network device.

According to the video optimization method provided in this possible implementation, the network device sends the first indication information to the UE only when determining that the UE has the capability of sending the video MOS to the network device and the UE is using the video service. Therefore, efficiency of obtaining the video MOS of the UE by the network device is improved, and air interface overheads of the network device are reduced.

According to a second aspect, an embodiment of the present invention provides a video optimization method, where the method may include:
receiving, by user equipment (UE), first indication information sent by a network device, where the first indication information is used to instruct the UE to send a video mean opinion score (MOS) of the UE to the network device, and the video MOS is used to represent a current video quality level;
obtaining, by the UE, the video MOS of the UE based on the first indication information; and
sending, by the UE, the video MOS to the network device.

Further, in a possible implementation of the second aspect, after the sending, by the UE, the video MOS to the network device, the method further includes:
receiving, by the UE, minimization of drive tests (MDT) measurement control information sent by the network device;
obtaining, by the UE, an MDT measurement report based on the MDT measurement control information; and
sending, by the UE, the MDT measurement report to the network device.

Optionally, in a possible implementation of the second aspect, before the receiving, by user equipment (UE), first indication information sent by a network device, the method further includes:
sending, by the UE, capability indication information to the network device, where the capability indication information is used to indicate to the network device that the UE has a capability of sending the video MOS to the network device.

For beneficial effects of the video optimization method provided in the second aspect and each possible implementation of the second aspect, refer to the beneficial effects brought by the first aspect and each possible implementation of the first aspect. Details are not described herein again.

According to a third aspect, an embodiment of the present invention provides a network device, where the network device includes:
a sending module, configured to send first indication information to user equipment (UE), where the first indication information is used to instruct the UE to send a video mean opinion score (MOS) of the UE to the network device, and the video MOS is used to represent a current video quality level; and
a receiving module, configured to receive the video MOS sent by the UE.

Further, in a possible implementation of the third aspect, the network device further includes:
a control module, configured to: after the receiving module receives the video MOS sent by the UE, control, based on the video MOS, a current network resource occupied by a video.

Further, in a possible implementation of the third aspect, the sending module is further configured to send minimization of drive tests (MDT) measurement control information to the UE after the receiving module receives the video MOS sent by the UE; and
the receiving module is further configured to receive an MDT measurement report sent by the UE.

Optionally, in a possible implementation of the third aspect, the receiving module is further configured to: before the sending module sends the first indication information to the user equipment (UE), receive capability indication information sent by the UE, where the capability indication information is used to indicate to the network device that the UE has a capability of sending the video MOS to the network device.

For beneficial effects of the network device provided in the third aspect and each possible implementation of the third aspect, refer to the beneficial effects brought by the first aspect and each possible implementation of the first aspect. Details are not described herein again.

According to a fourth aspect, an embodiment of the present invention provides user equipment (UE), where the UE includes:
a receiving module, configured to receive first indication information sent by a network device, where the first indication information is used to instruct the UE to send a video mean opinion score (MOS) of the UE to the network device, and the video MOS is used to represent a current video quality level;
an obtaining module, configured to obtain the video MOS of the UE based on the first indication information received by the receiving module; and
a sending module, configured to send the video MOS obtained by the obtaining module to the network device.

Further, in a possible implementation of the fourth aspect, the receiving module is further configured to: after the sending module sends the video MOS to the network device, receive minimization of drive tests (MDT) measurement control information sent by the network device;
the obtaining module is further configured to obtain an MDT measurement report based on the MDT measurement control information received by the receiving module; and
the sending module is further configured to send the MDT measurement report obtained by the obtaining module to the network device.

Optionally, in a possible implementation of the fourth aspect, the sending module is further configured to send capability indication information to the network device before the receiving module receives the first indication information sent by the network device, where the capability indication information is used to indicate to the network device that the UE has a capability of sending the video MOS to the network device.

For beneficial effects of the UE provided in the fourth aspect and each possible implementation of the fourth aspect, refer to the beneficial effects brought by the first aspect and each possible implementation of the first aspect. Details are not described herein again.

According to a fifth aspect, an embodiment of the present invention provides a network device, where the network device includes:
a transmitter, configured to send first indication information to user equipment (UE), where the first indication information is used to instruct the UE to send a video mean opinion score (MOS) of the UE to the network device, and the video MOS is used to represent a current video quality level; and
a receiver, configured to receive the video MOS sent by the UE.

Further, in a possible implementation of the fifth aspect, the network device further includes:
a processor, configured to: after the receiver receives the video MOS sent by the UE, control, based on the video MOS, a current network resource occupied by a video.

Further, in a possible implementation of the fifth aspect, the transmitter is further configured to send minimization of drive tests (MDT) measurement control information to the UE after the receiver receives the video MOS sent by the UE; and
the receiver is further configured to receive an MDT measurement report sent by the UE.

Optionally, in a possible implementation of the fifth aspect, the receiver is further configured to: before the transmitter sends the first indication information to the user equipment (UE), receive capability indication information sent by the UE, where the capability indication information is used to indicate to the network device that the UE has a capability of sending the video MOS to the network device.

For beneficial effects of the network device provided in the fifth aspect and each possible implementation of the fifth aspect, refer to the beneficial effects brought by the first aspect and each possible implementation of the first aspect. Details are not described herein again.

According to a sixth aspect, an embodiment of the present invention provides user equipment (UE), where the UE includes:
a receiver, configured to receive first indication information sent by a network device, where the first indication information is used to instruct the UE to send a video mean opinion score (MOS) of the UE to the network device, and the video MOS is used to represent a current video quality level;
a processor, configured to obtain the video MOS of the UE based on the first indication information received by the receiver; and
a transmitter, configured to send the video MOS obtained by the processor to the network device.

Further, in a possible implementation of the sixth aspect, the receiver is further configured to: after the transmitter sends the video MOS to the network device, receive minimization of drive tests (MDT) measurement control information sent by the network device;
the processor is further configured to obtain an MDT measurement report based on the MDT measurement control information received by the receiver; and
the transmitter is further configured to send the MDT measurement report obtained by the processor to the network device.

Optionally, in a possible implementation of the sixth aspect, the transmitter is further configured to send capability indication information to the network device before the receiver receives the first indication information sent by the network device, where the capability indication information is used to indicate to the network device that the UE has a capability of sending the video MOS to the network device.

For beneficial effects of the UE provided in the sixth aspect and each possible implementation of the sixth aspect, refer to the beneficial effects brought by the first aspect and each possible implementation of the first aspect. Details are not described herein again.

With reference to the first aspect and each possible implementation of the first aspect, the second aspect and each possible implementation of the second aspect, the third aspect and each possible implementation of the third aspect, the fourth aspect and each possible implementation of the fourth aspect, the fifth aspect and each possible implementation of the fifth aspect, and the sixth aspect and each possible implementation of the sixth aspect, the video MOS includes a video MOS value and/or a value of a video MOS parameter, and the video MOS parameter includes at least one of a video resolution, a video bit rate, a video codec, a video codec profile, an initial buffering delay, and a stalling ratio.

With reference to the first aspect and each possible implementation of the first aspect, the second aspect and each possible implementation of the second aspect, the third aspect and each possible implementation of the third aspect, the fourth aspect and each possible implementation of the fourth aspect, the fifth aspect and each possible implementation of the fifth aspect, and the sixth aspect and each possible implementation of the sixth aspect, the first indication information further includes a reporting criterion parameter, and the reporting criterion parameter is used to indicate a manner of sending the video MOS to the network device by the UE.

With reference to the first aspect and each possible implementation of the first aspect, the second aspect and each possible implementation of the second aspect, the third aspect and each possible implementation of the third aspect, the fourth aspect and each possible implementation of the fourth aspect, the fifth aspect and each possible implementation of the fifth aspect, and the sixth aspect and each possible implementation of the sixth aspect, when the reporting criterion parameter is a reporting cycle, the reporting criterion parameter is specifically used to instruct the UE to send the video MOS to the network device based on the reporting cycle.

With reference to the first aspect and each possible implementation of the first aspect, the second aspect and each possible implementation of the second aspect, the third aspect and each possible implementation of the third aspect, the fourth aspect and each possible implementation of the fourth aspect, the fifth aspect and each possible implementation of the fifth aspect, and the sixth aspect and each possible implementation of the sixth aspect, when the reporting criterion parameter is a reporting threshold, the reporting criterion parameter is specifically used to instruct the UE to send the video MOS to the network device when the video MOS is less than the reporting threshold.

With reference to the first aspect and each possible implementation of the first aspect, the second aspect and each possible implementation of the second aspect, the third aspect and each possible implementation of the third aspect, the fourth aspect and each possible implementation of the fourth aspect, the fifth aspect and each possible implementation of the fifth aspect, and the sixth aspect and each possible implementation of the sixth aspect, when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

According to the video optimization method, the user equipment, and the network device provided in the embodiments of the present invention, the network device sends the first indication information to the UE, so that the UE can send the video MOS of the UE to the network device based on the first indication information. Therefore, the network device can learn of the video MOS of the UE, and learn of in a timely manner, based on the current video quality level represented by the video MOS, the video quality and user experience when the user uses the video service by using the UE. In this way, when the video quality is relatively poor, that is, when user experience is relatively poor, the network device can radically optimize the video quality, so as to avoid video stalling. Therefore, the video quality is ensured, and user experience is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a system architectural diagram of a video optimization method according to an embodiment of the present invention;
FIG. 2 is a signaling flowchart of Embodiment 1 of a video optimization method according to an embodiment of the present invention;
FIG. 3 is a signaling flowchart of Embodiment 2 of a video optimization method according to an embodiment of the present invention;
FIG. 4 is a schematic structural diagram of Embodiment 1 of a network device according to an embodiment of the present invention;
FIG. 5 is a schematic structural diagram of Embodiment 2 of a network device according to an embodiment of the present invention;
FIG. 6 is a schematic structural diagram of Embodiment 1 of user equipment according to an embodiment of the present invention;
FIG. 7 is a schematic structural diagram of Embodiment 3 of a network device according to an embodiment of the present invention;
FIG. 8 is a schematic structural diagram of Embodiment 4 of a network device according to an embodiment of the present invention;
FIG. 9 is a schematic structural diagram of Embodiment 2 of user equipment according to an embodiment of the present invention; and
FIG. 10 is a block diagram of a partial structure when user equipment is a mobile phone according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

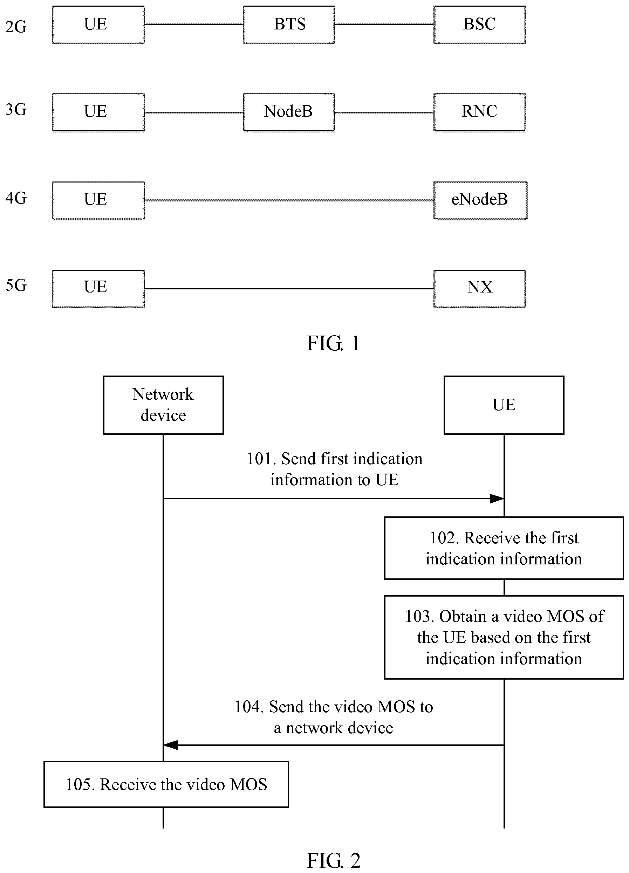

FIG. 1 is a system architectural diagram of a video optimization method according to an embodiment of the present invention. As shown in FIG. 1, the video optimization method may be applied to a case in which video optimization is performed on UE that is using a video service in a 2G wireless communications system, and may be applied to a case in which video optimization is performed on UE that is using a video service in a 3G wireless communications system, a 4G wireless communications system, or a 5G wireless communications system. When a system architecture is the 2G wireless communications system, the UE communicates with a BSC by using a base station BTS. When the system architecture is the 3G wireless communications system, the UE communicates with an RNC by using a base station NodeB. When the system architecture is the 4G wireless communications system, the UE directly communicates with an eNodeB. When the system architecture is the 5G wireless communications system, the UE directly communicates with an NX. Certainly, the video optimization method provided in this embodiment of the present invention includes but is not limited to the foregoing application scenarios. The video optimization method provided in this embodiment of the present invention may be applied to all scenarios in which UE uses a video service by using a wireless communications system.

In addition, the user equipment (UE) in this embodiment of the present invention may be a wireless terminal such as a mobile phone or a tablet computer. The wireless terminal includes a device that provides a voice and/or data service for a user. Optionally, the device may be a handheld device having a wireless connection function or another processing device connected to a wireless modem. In addition, the wireless terminal may also communicate with one or more core networks through a radio access network (such as RAN, Radio Access Network). For example, the wireless terminal may be specifically a mobile terminal, such as a mobile phone (also referred to as a "cellular" phone) and a computer with a mobile terminal, and the computer with a mobile terminal may be a portable, pocket-sized, handheld, computer built-in, or in-vehicle mobile apparatus, which can exchange voice and/or data with the core network. For example, it may be a device such as a personal communication service (PCS, Personal Communication Service) phone, a cordless telephone set, a session initiation protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

A network device in this embodiment of the present invention may be any device that has a function of managing a radio network resource in a cellular communications network. For example, the network device may be a base station controller (BSC, Base Station Controller) in GSM or CDMA, or may be a radio network controller (RNC, Radio Network Controller) in WCDMA, or may be an evolved NodeB (eNB or eNodeB, evolved NodeB) in LTE, or may be a wireless transceiver device (NX, NeXt Node) in 5G. This is not limited in this embodiment of the present invention.

The video optimization method in the embodiments of the present invention is intended to resolve a technical problem that a video optimization manner in the prior art has a poor video optimization effect and user experience is relatively poor.

The technical solutions of the present invention and how the technical solutions of the present invention resolve the foregoing technical problem are described in detail below by using specific embodiments. The following specific embodiments may be mutually combined, and same or similar concepts or processes may not be repeatedly described in some embodiments.

FIG. 2 is a signaling flowchart of Embodiment 1 of a video optimization method according to an embodiment of the present invention. This embodiment describes a specific process in which a network device obtains a video MOS of UE that is using a video service, to determine video quality and user experience when a user is currently using the video service by using the UE. As shown in FIG. 2, the method includes the following steps.
S101. A network device sends first indication information to UE.

The first indication information is used to instruct the UE to send a video mean opinion score (Mean Opinion Score, MOS for short) of the UE to the network device, and the video MOS is used to represent a current video quality level.

Specifically, when the network device determines that the UE is using the video service, that is, the user is watching a video by using the UE through a wireless communications network, the network device may send the first indication information to the UE. The first indication information is used to instruct the UE to send the video MOS of the UE to the network device. During specific implementation, the network device may send the first indication information to the UE by adding the first indication information to any signaling exchanged with the UE, such as measurement control signaling.

The video MOS of the UE may be any information that can represent the current video quality level. In this embodiment, the video quality level may be specifically classified into the following five levels: imperceptible (for example, video play is smooth and video stalling does not occur), perceptible but not annoying (for example, video play is basically smooth, video stalling occasionally occurs, and stalling duration is relatively short), perceptible and slightly annoying (for example, video play is basically smooth, stalling frequency is relatively high, but stalling duration is relatively short), annoying but not repulsive (for example, video play stalling frequency is excessively high but stalling duration is relatively short), and extremely annoying and repulsive (for example, video stalling frequency is excessively high and stalling duration is relatively long). The video quality level may be specifically adjusted or reclassified based on a user requirement. Optionally, the video MOS may be a video MOS value, or may be a value of a video MOS parameter, or may include the video MOS value and the value of the video MOS parameter. The video MOS value may be a score that is in a one-to-one correspondence with the video quality level. For example, the correspondence may be shown in Table 1.

**Table 1**

| **Video MOS value** | **Video quality level** |
|---|---|
| 5 | Imperceptible |
| 4 | Perceptible but not annoying |
| 3 | Perceptible and slightly annoying |
| 2 | Annoying but not repulsive |
| 1 | Extremely annoying and repulsive |

The video MOS parameter may be a parameter used for calculating the video MOS value. For example, the video MOS parameter may include one or more of a video resolution, a video bit rate, a video codec, a video codec profile, an initial buffering delay, and a stalling ratio. A definition corresponding to the video MOS parameter may be specifically shown in Table 2.

**Table 2**

| **Video MOS parameter** | **Definition** |
|---|---|
| Video resolution (Video resolution) | Parameter for measuring a quantity in an image, for example, 360 p (p indicates pixels per inch) |
| Video bit rate (Video bit rate) | A ratio of a video size to video play duration, and a unit is Kbps |
| Video codec (Video codec) | Video coding mode, such as H.264 |
| Video codec profile (Video codec profile) | Used for describing a profile or a description file of a specific video coding mode, for example, H.264 has three files: basic, primary, and advanced |
| Initial buffering delay (Initial buffering latency) | A time interval between a moment when a user taps a video and a moment when the video is played, and a unit is ms |
| Stalling ratio (Stalling ratio) | A ratio of total stalling duration to (total video duration-initial buffering delay-total stalling duration) |

S102. The UE receives the first indication information.
S103. The UE obtains a video MOS of the UE based on the first indication information.

Specifically, if the video MOS of the UE is the video MOS value, when obtaining the video MOS value, the UE may obtain the value of the video MOS parameter from a running video APP on the UE based on the first indication information, and calculate the video MOS value (namely, the video MOS of the UE) based on the obtained value of the video MOS parameter. If the video MOS of the UE is the value of the video MOS parameter, when obtaining the value of the video MOS parameter, the UE may directly obtain the value of the video MOS parameter (namely, the video MOS of the UE) from the running video APP on the UE based on the first indication information.

An implementation for calculating the video MOS value based on the value of the video MOS parameter may be specifically determined based on a user requirement, and is not limited in this embodiment.
S 104. The UE sends the video MOS to the network device.

Specifically, the UE may send the video MOS to the network device by adding the video MOS to any measurement report or by adding the video MOS to any signaling exchanged with the network device, or may directly send the video MOS to the network device. This may be specifically determined based on a user requirement. A manner of sending the video MOS to the network device by the UE is not limited in this embodiment of the present invention.
S105. The network device receives the video MOS.

Specifically, after receiving the video MOS sent by the UE, the network device may learn of, based on the current video quality level represented by the video MOS, video quality when the user is currently watching the video by using the UE through the wireless communications network. Optionally, when learning based on the video MOS that the current video quality is relatively good, the network device may take no optimization measure so as to reduce network device overheads. Optionally, when the network device learns based on the video MOS that the current video quality is relatively poor, because the video MOS can indirectly reflect actual network quality of the network used for watching the current video, the network device may learn of the current network quality based on the video MOS, so as to optimize the video from a network perspective. For example, the network device may optimize the video quality in a manner of enhancing signal coverage, adding network resources occupied by the video, increasing a video downloading rate, or the like, so as to avoid video stalling and improve user experience. A rule for determining that the video quality is relatively poor may be specifically determined based on a user requirement. For example, the rule for determining that the video quality is relatively poor may be as follows: When the video quality is less than or equal to "perceptible and slightly annoying", the video quality is relatively poor.

In the prior art, UE sends a QoE parameter obtained when the UE is currently watching a video to a video server by using a network device, so that the video server can learn of, based on the QoE parameter, video quality and user experience when a user is watching the video. When user experience is poor, the video server may optimize the video, watched by the user, in a manner of adjusting a video format, for example, in a manner of adjusting the video format from high definition to standard definition. However, although this manner can reduce video stalling when the user is watching the video, because the video format is changed, when the user is watching the video, the video quality is still relatively poor, and user experience is relatively poor.

However, according to the video optimization method provided in this embodiment, the network device can learn of in a timely manner the video MOS of the UE that is using the video service, and determine, based on the current video quality level represented by the video MOS, the video quality and user experience when the user uses the video service by using the UE. In this way, when the video quality is relatively poor, that is, when user experience is relatively poor, the network device can radically optimize the video quality. For example, the video quality is optimized in the manner of enhancing the signal coverage, adding the network resources occupied by the video, increasing the video downloading rate, or the like, so as to avoid video stalling without changing the video format. The video quality is ensured, and user experience is improved.

According to the video optimization method provided in this embodiment of the present invention, the network device sends the first indication information to the UE, so that the UE can send the video MOS of the UE to the network device based on the first indication information. Therefore, the network device can learn of the video MOS of the UE, and learn of in a timely manner, based on the current video quality level represented by the video MOS, the video quality and user experience when the user uses the video service by using the UE. In this way, when the video quality is relatively poor, that is, when user experience is relatively poor, the network device can radically optimize the video quality, so as to avoid video stalling. The video quality is ensured, and user experience is improved.

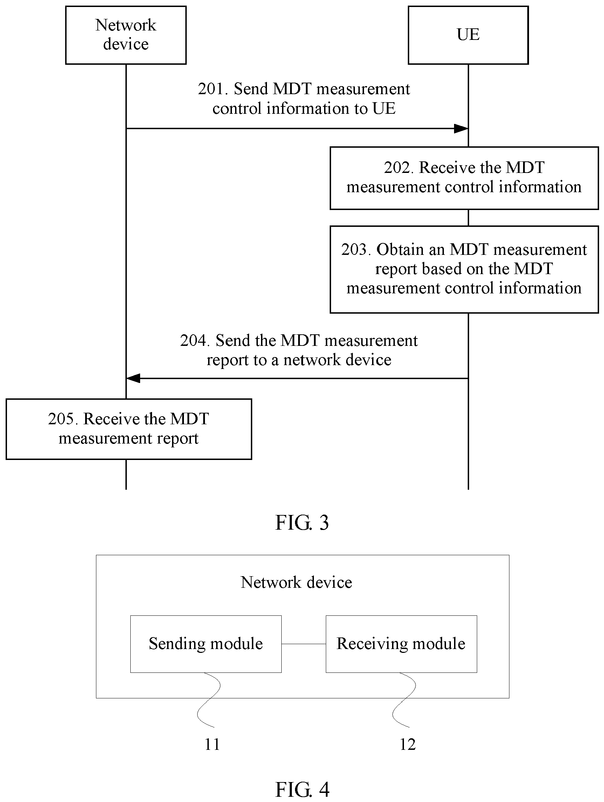

FIG. 3 is a signaling flowchart of Embodiment 2 of a video optimization method according to an embodiment of the present invention. This embodiment describes a specific process in which a network device performs video optimization based on a video MOS after receiving the video MOS sent by UE. As shown in FIG. 3, after S105, the method includes the following steps.
S201. The network device sends minimization of drive tests (Minimization of drive tests, MDT) measurement control information to the UE.

Specifically, when the network device determines, based on a current video quality level represented by the video MOS, that current video quality is relatively poor, the network device may send the MDT measurement control information to the UE, to instruct the UE to send an MDT measurement report of the UE to the network device. The MDT measurement report may be used to indicate current air interface information of the UE to the network device.
S202. The UE receives the MDT measurement control information.
S203. The UE obtains an MDT measurement report based on the MDT measurement control information.

Specifically, after receiving the MDT measurement control information, the UE may start MDT measurement, so as to measure the current air interface information of the UE. For example, the air interface information may include one or more pieces of information such as identification information of a camped cell of the UE, signal quality of the camped cell, location information of the UE, and a difference between a moment at which MDT measurement occurs and a time at which the measurement control information is received. Then the MDT measurement report is generated based on the measured air interface information.
S204. The UE sends the MDT measurement report to the network device.
S205. The network device receives the MDT measurement report.

Specifically, after receiving the MDT measurement report sent by the UE, the network device may determine, based on the air interface information in the MDT measurement report, whether the poor video quality is related to a current location of the UE and current signal quality of the UE. If at this time, the UE is currently located at an edge location of a cell and the current signal quality of the UE is relatively poor, it indicates that the video quality is relatively poor because the signal quality of the UE is relatively poor. In this case, the network device may further perform video optimization on the UE by improving the signal quality of the UE, so as to avoid video stalling and improve user experience. If at this time, the UE is located at a core location of the cell and the current signal quality of the UE is quite good, it indicates that the poor video quality is unrelated to the location of the UE but is caused due to congestion of a core network. Therefore, the network device may further perform video optimization by adjusting a network resource on a core network side by using the core network, so as to avoid video stalling and improve user experience.

According to the video optimization method provided in this embodiment of the present invention, after receiving the video MOS sent by the UE, the network device may further obtain a current MDT drive test report of the UE by instructing the UE to perform an MDT drive test, so that the network device can determine, based on the MDT drive test report, a reason why the video quality of the UE is poor. In this way, the network device can accordingly perform video optimization based on the reason why the video quality is poor, so as to avoid video stalling, ensure the video quality, and improve user experience.

In another implementation of the present invention, the network device may further perform video optimization in the following manner: The network device directly controls, based on the video MOS, the current network resource occupied by the video. Optionally, the network device may decrease or suspend, based on an access control mechanism, another UE (the UE herein may be UE used by a common user or may be UE of machine type communication (Machine Type Communication, MTC for short)) that accesses the network or from accessing the network, so as to ensure network resource occupancy of the UE that is using the video service in the current network. For example, the access control mechanism herein may be access class barring (Access Class Barring, AC Barring for short) or extended access barring (Extended Access Barring, EAB for short). Optionally, the network device may further lower a network resource scheduling priority of UE that uses a non-video service and that accesses the network or release an RRC connection of the UE that uses the non-video service, so as to ensure the network resource occupancy of the UE that is using the video service in the current network, and prevent the UE that is using the video service from encountering video stalling. Therefore, the video quality is ensured, and user experience is improved.

According to the video optimization method provided in this embodiment of the present invention, after receiving the video MOS sent by the UE, the network device may further decrease a quantity of UEs that access the network, to ensure the network resource occupancy of the UE that is using the video service, and prevent the UE that is using the video service from encountering video stalling. Therefore, the video quality is ensured, and user experience is improved.

Further, based on the foregoing embodiment, Embodiment 3 describes a specific process in which the network device receives, before sending the first indication information to the UE, capability indication information sent by the UE. Before S101, the method may further include the following step: The network device receives the capability indication information sent by the UE. The capability indication information is used to indicate to the network device that the UE has a capability of sending the video MOS to the network device. In this manner, before sending the first indication information to the UE, the network device may determine, based on the received capability indication information sent by the UE, whether the UE has the capability of sending the video MOS to the network device. The network device sends the first indication information to the UE only when determining that the UE has the capability of sending the video MOS to the network device and the UE is using the video service. Therefore, efficiency of obtaining the video MOS of the UE by the network device is improved, and air interface overheads of the network device are reduced.

Further, based on the foregoing embodiment, in Embodiment 4, the first indication information further includes a reporting criterion parameter. The reporting criterion parameter is used to indicate a manner of sending the video MOS to the network device by the UE. Embodiment 4 describes a specific process in which the UE sends the video MOS of the UE to the network device based on the reporting criterion parameter carried in the first indication information. S104 may specifically have the following three implementations:

The first implementation: When the reporting criterion parameter is a reporting cycle, the reporting criterion parameter is specifically used to instruct the UE to send the video MOS to the network device based on the reporting cycle.

Specifically, when the reporting criterion parameter is the reporting cycle, the UE may periodically and continuously send the video MOS to the network device based on the reporting cycle after receiving the first indication information. For example, the reporting cycle is five seconds. The UE sends the video MOS of the UE to the network device once every five seconds after receiving the first indication information.

The second implementation: When the reporting criterion parameter is a reporting threshold, the reporting criterion parameter is specifically used to instruct the UE to send the video MOS to the network device when the video MOS is less than the reporting threshold.

Specifically, when the video MOS is a video MOS value, the reporting threshold may be a value of the video MOS, and the value may be a score of poor video quality that is defined by the user. For example, the video MOS value is 1 to 5, and the reporting threshold may be 3. When the video MOS is a value of a video MOS parameter, the reporting threshold may be a threshold of any video MOS parameter of the video MOS parameter, and the threshold of the parameter may be a threshold of poor video quality that is defined by the user. For example, the video MOS parameter includes a video resolution, a video bit rate, a video codec, a video codec profile, an initial buffering delay, and a stalling ratio. The reporting threshold may be a threshold of the stalling ratio or a threshold of the initial buffering delay. This may be specifically determined based on a user requirement.

In this manner, the UE sends the video MOS of the UE to the network device only when the video quality is relatively poor. In this way, after receiving the video MOS, the network device can perform corresponding video optimization based on the video MOS, and efficiency of performing video optimization by the network device is improved.

The third implementation: When the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

Specifically, for example, the video MOS is a video MOS value. It is assumed that the reporting threshold is 3 and the first duration is 10 seconds. The UE immediately sends the video MOS to the network device after the UE receives the first indication information and when the UE determines, based on the reporting parameter in the first indication information, that duration during which the video MOS value is less than 3 is greater than or equal to 10 seconds. In this manner, the UE sends the video MOS of the UE to the network device only when the video quality is poor for a period of time. In this way, after receiving the video MOS, the network device can perform corresponding video optimization based on the video MOS, and efficiency of performing video optimization by the network device is improved.

According to the video optimization method provided in this embodiment of the present invention, the network device sends the first indication information to the UE, so that the UE can send the video MOS of the UE to the network device based on the first indication information. Therefore, the network device can learn of the video MOS of the UE, and further learn of in a timely manner, based on the current video quality level represented by the video MOS, the video quality and user experience when the user uses the video service by using the UE. In this way, when the video quality is relatively poor, that is, when user experience is relatively poor, the network device can radically optimize the video quality, so as to avoid video stalling. Therefore, the video quality is ensured, and user experience is improved.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

FIG. 4 is a schematic structural diagram of Embodiment 1 of a network device according to an embodiment of the present invention. As shown in FIG. 4, the network device may include a sending module 11 and a receiving module 12.

The sending module 11 may be configured to send first indication information to user equipment (UE). The first indication information may be used to instruct the UE to send a video mean opinion score (MOS) of the UE to the network device, and the video MOS is used to represent a current video quality level. Optionally, the video MOS may be a video MOS value, or may be a value of a video MOS parameter, or may include the video MOS value and the value of the video MOS parameter. The video MOS parameter may include at least one of a video resolution, a video bit rate, a video codec, a video codec profile, an initial buffering delay, and a stalling ratio.

The receiving module 12 may be configured to receive the video MOS sent by the UE.

The network device provided in this embodiment of the present invention may execute the foregoing method embodiments, and implementation principles and technical effects of the method and the network device are similar, which are not repeatedly described herein.

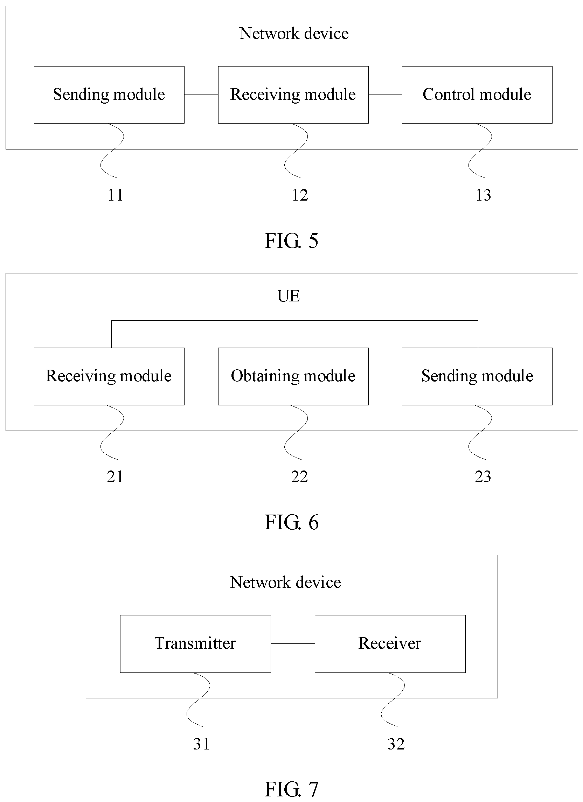

FIG. 5 is a schematic structural diagram of Embodiment 2 of a network device according to an embodiment of the present invention. Based on the embodiment shown in FIG. 4, as shown in FIG. 5, further, the network device may further include a control module 13. The control module 13 may be configured to: after the receiving module 12 receives the video MOS sent by the UE, control, based on the video MOS, a current network resource occupied by a video.

In another implementation of the present invention, the sending module 11 may be further configured to send minimization of drive tests (MDT) measurement control information to the UE after the receiving module 12 receives the video MOS sent by the UE. The receiving module 12 may be further configured to receive an MDT measurement report sent by the UE.

The network device provided in this embodiment of the present invention may execute the foregoing method embodiments, and implementation principles and technical effects of the method and the network device are similar, which are not repeatedly described herein.

Optionally, the first indication information may further include a reporting criterion parameter, and the reporting criterion parameter may be used to indicate a manner of sending the video MOS to the network device by the UE.

In an implementation of the present invention, when the reporting criterion parameter is a reporting cycle, the reporting criterion parameter may be specifically used to instruct the UE to send the video MOS to the network device based on the reporting cycle.

In another implementation of the present invention, when the reporting criterion parameter is a reporting threshold, the reporting criterion parameter may be specifically used to instruct the UE to send the video MOS to the network device when the video MOS is less than the reporting threshold.

In still another implementation of the present invention, when the reporting criterion parameter is a reporting threshold and first duration, the reporting criterion parameter may be specifically used to instruct the UE to send the video MOS to the network device when the video MOS is less than the reporting threshold and duration of a state in which the video MOS is less than the reporting threshold is greater than or equal to the first duration.

The network device provided in this embodiment of the present invention may execute the foregoing method embodiments, and implementation principles and technical effects of the method and the network device are similar, which are not repeatedly described herein.

Optionally, the receiving module 12 may be further configured to: before the sending module 11 sends the first indication information to the user equipment (UE), receive capability indication information sent by the UE. The capability indication information may be used to indicate to the network device that the UE has a capability of sending the video MOS to the network device.

The network device provided in this embodiment of the present invention may execute the foregoing method embodiments, and implementation principles and technical effects of the method and the network device are similar, which are not repeatedly described herein.

FIG. 6 is a schematic structural diagram of Embodiment 1 of user equipment according to an embodiment of the present invention. As shown in FIG. 6, the user equipment (UE) may include a receiving module 21, an obtaining module 22, and a sending module 23.

The receiving module 21 may be configured to receive first indication information sent by a network device. The first indication information may be used to instruct the UE to send a video mean opinion score (MOS) of the UE to the network device, and the video MOS is used to represent a current video quality level. Optionally, the video MOS may be a video MOS value, or may be a value of a video MOS parameter, or may include the video MOS value and the value of the video MOS parameter. The video MOS parameter may include at least one of a video resolution, a video bit rate, a video codec, a video codec profile, an initial buffering delay, and a stalling ratio.

The obtaining module 22 may be configured to obtain the video MOS of the UE based on the first indication information received by the receiving module 21.

The sending module 23 may be configured to send the video MOS obtained by the obtaining module 22 to the network device.

The UE provided in this embodiment of the present invention may execute the foregoing method embodiments, and implementation principles and technical effects of the method and the UE are similar, which are not repeatedly described herein.

Further, based on the foregoing embodiment, the receiving module 21 may be further configured to: after the sending module 23 sends the video MOS to the network device, receive minimization of drive tests (MDT) measurement control information sent by the network device.

The obtaining module 22 may be further configured to obtain an MDT measurement report based on the MDT measurement control information received by the receiving module 21. The sending module 23 may be further configured to send the MDT measurement report obtained by the obtaining module 22 to the network device.

The UE provided in this embodiment of the present invention may execute the foregoing method embodiments, and implementation principles and technical effects of the method and the UE are similar, which are not repeatedly described herein.

Optionally, the first indication information may further include a reporting criterion parameter, and the reporting criterion parameter may be used to indicate a manner of sending the video MOS to the network device by the UE.

In an implementation of the present invention, when the reporting criterion parameter is a reporting cycle, the reporting criterion parameter may be specifically used to instruct the UE to send the video MOS to the network device based on the reporting cycle.

In another implementation of the present invention, when the reporting criterion parameter is a reporting threshold, the reporting criterion parameter may be specifically used to instruct the UE to send the video MOS to the network device when the video MOS is less than the reporting threshold.

In still another implementation of the present invention, when the reporting criterion parameter is a reporting threshold and first duration, the reporting criterion parameter may be specifically used to instruct the UE to send the video MOS to the network device when the video MOS is less than the reporting threshold and duration of a state in which the video MOS is less than the reporting threshold is greater than or equal to the first duration.

The UE provided in this embodiment of the present invention may execute the foregoing method embodiments, and implementation principles and technical effects of the method and the UE are similar, which are not repeatedly described herein.

Optionally, the sending module 23 may be further configured to send capability indication information to the network device before the receiving module 21 receives the first indication information sent by the network device. The capability indication information may be used to indicate to the network device that the UE has a capability of sending the video MOS to the network device.

The UE provided in this embodiment of the present invention may execute the foregoing method embodiments, and implementation principles and technical effects of the method and the UE are similar, which are not repeatedly described herein.

FIG. 7 is a schematic structural diagram of Embodiment 3 of a network device according to an embodiment of the present invention. As shown in FIG. 7, the network device may include a transmitter 31 and a receiver 32. The transmitter 31 and the receiver 32 may be integrated into a transceiver of the network device or may be independent transceiver antennas on the network device.

The transmitter 31 may be configured to send first indication information to user equipment (UE). The first indication information may be used to instruct the UE to send a video mean opinion score (MOS) of the UE to the network device, and the video MOS is used to represent a current video quality level. Optionally, the video MOS may be a video MOS value, or may be a value of a video MOS parameter, or may include the video MOS value and the value of the video MOS parameter. The video MOS parameter may include at least one of a video resolution, a video bit rate, a video codec, a video codec profile, an initial buffering delay, and a stalling ratio.

The receiver 32 may be configured to receive the video MOS sent by the UE.

The network device provided in this embodiment of the present invention may execute the foregoing method embodiments, and implementation principles and technical effects of the method and the network device are similar, which are not repeatedly described herein.

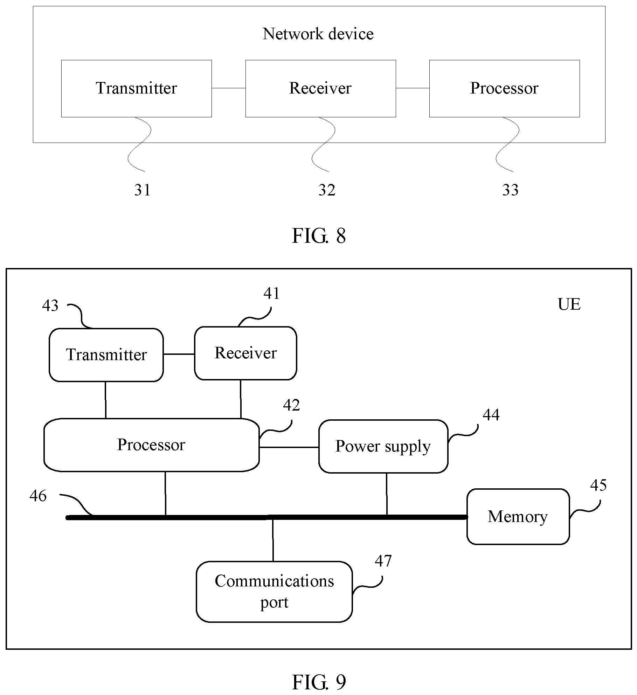

FIG. 8 is a schematic structural diagram of Embodiment 4 of a network device according to an embodiment of the present invention. Based on the embodiment shown in FIG. 7, as shown in FIG. 8, further, the network device may further include a processor 33. The processor 33 may be configured to: after the receiver 32 receives the video MOS sent by the UE, control, based on the video MOS, a current network resource occupied by a video.

The network device provided in this embodiment of the present invention may execute the foregoing method embodiments, and implementation principles and technical effects of the method and the network device are similar, which are not repeatedly described herein.

In another implementation of the present invention, the transmitter 31 may be further configured to send minimization of drive tests (MDT) measurement control information to the UE after the receiver 32 receives the video MOS sent by the UE. The receiver 32 may be further configured to receive an MDT measurement report sent by the UE.

Optionally, the first indication information may further include a reporting criterion parameter, and the reporting criterion parameter may be used to indicate a manner of sending the video MOS to the network device by the UE.

In an implementation of the present invention, when the reporting criterion parameter is a reporting cycle, the reporting criterion parameter may be specifically used to instruct the UE to send the video MOS to the network device based on the reporting cycle.

In another implementation of the present invention, when the reporting criterion parameter is a reporting threshold, the reporting criterion parameter may be specifically used to instruct the UE to send the video MOS to the network device when the video MOS is less than the reporting threshold.

In still another implementation of the present invention, when the reporting criterion parameter is a reporting threshold and first duration, the reporting criterion parameter may be specifically used to instruct the UE to send the video MOS to the network device when the video MOS is less than the reporting threshold and duration of a state in which the video MOS is less than the reporting threshold is greater than or equal to the first duration.

The network device provided in this embodiment of the present invention may execute the foregoing method embodiments, and implementation principles and technical effects of the method and the network device are similar, which are not repeatedly described herein.

Optionally, the receiver 32 may be further configured to: before the transmitter 31 sends the first indication information to the user equipment (UE), receive capability indication information sent by the UE. The capability indication information may be used to indicate to the network device that the UE has a capability of sending the video MOS to the network device.

The network device provided in this embodiment of the present invention may execute the foregoing method embodiments, and implementation principles and technical effects of the method and the network device are similar, which are not repeatedly described herein.

FIG. 9 is a schematic structural diagram of Embodiment 2 of user equipment according to an embodiment of the present invention. As shown in FIG. 9, the user equipment (UE) may include a receiver 41, a processor 42 (such as a CPU), and a transmitter 43. The receiver 41 and the transmitter 43 may be integrated into a transceiver of the user equipment or may be independent transceiver antennas on the user equipment. The user equipment in this embodiment of the present invention may further include a power supply 44, a memory 45, a communications bus 46, and a communications port 47. The communications bus 46 is configured to implement communicative connection between components. The memory 45 may include a high-speed RAM memory, or may include a non-volatile memory NVM, for example, at least one disk memory. The memory 45 may store various programs, so as to complete various processing functions and implement steps of the method in this embodiment. The communications port 47 is configured to implement connection and communication between the user equipment and another peripheral.

The receiver 41 may be configured to receive first indication information sent by a network device. The first indication information is used to instruct the UE to send a video mean opinion score (MOS) of the UE to the network device, and the video MOS is used to represent a current video quality level. Optionally, the video MOS may be a video MOS value, or may be a value of a video MOS parameter, or may include the video MOS value and the value of the video MOS parameter. The video MOS parameter may include at least one of a video resolution, a video bit rate, a video codec, a video codec profile, an initial buffering delay, and a stalling ratio.

The processor 42 may be configured to obtain the video MOS of the UE based on the first indication information received by the receiver 41.

The transmitter 43 may be configured to send the video MOS obtained by the processor 42 to the network device.

The UE provided in this embodiment of the present invention may execute the foregoing method embodiments, and implementation principles and technical effects of the method and the UE are similar, which are not repeatedly described herein.

Further, based on the foregoing embodiment, the receiver 41 may be further configured to: after the transmitter 43 sends the video MOS to the network device, receive minimization of drive tests (MDT) measurement control information sent by the network device.

The processor 42 may be further configured to obtain an MDT measurement report based on the MDT measurement control information received by the receiver 41. The transmitter 43 may be further configured to send the MDT measurement report obtained by the processor 42 to the network device.

Optionally, the first indication information may further include a reporting criterion parameter, and the reporting criterion parameter may be used to indicate a manner of sending the video MOS to the network device by the UE.

In an implementation of the present invention, when the reporting criterion parameter is a reporting cycle, the reporting criterion parameter may be specifically used to instruct the UE to send the video MOS to the network device based on the reporting cycle.

In another implementation of the present invention, when the reporting criterion parameter is a reporting threshold, the reporting criterion parameter may be specifically used to instruct the UE to send the video MOS to the network device when the video MOS is less than the reporting threshold.

In still another implementation of the present invention, when the reporting criterion parameter is a reporting threshold and first duration, the reporting criterion parameter may be specifically used to instruct the UE to send the video MOS to the network device when the video MOS is less than the reporting threshold and duration of a state in which the video MOS is less than the reporting threshold is greater than or equal to the first duration.

The UE provided in this embodiment of the present invention may execute the foregoing method embodiments, and implementation principles and technical effects of the method and the UE are similar, which are not repeatedly described herein.

Optionally, the transmitter 43 may be further configured to send capability indication information to the network device before the receiver 41 receives the first indication information sent by the network device. The capability indication information may be used to indicate to the network device that the UE has a capability of sending the video MOS to the network device.

The UE provided in this embodiment of the present invention may execute the foregoing method embodiments, and implementation principles and technical effects of the method and the UE are similar, which are not repeatedly described herein.

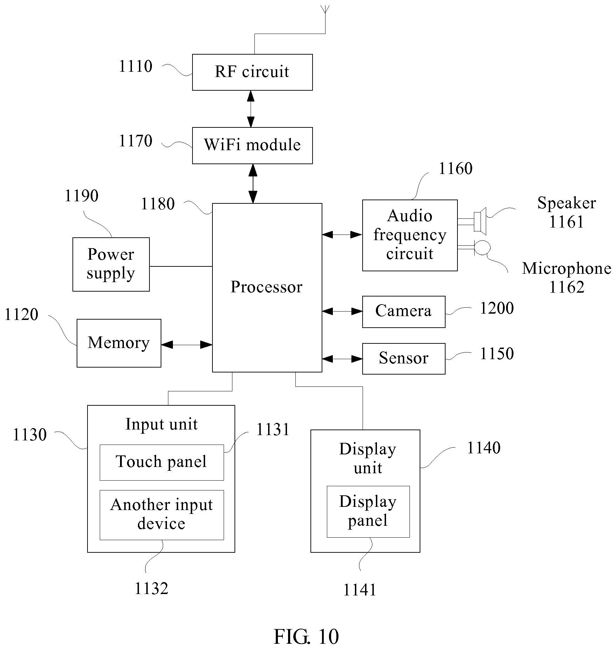

As described in the foregoing embodiments, the user equipment in the embodiments of the present invention may be a wireless terminal such as a mobile phone or a tablet computer. Therefore, that the user equipment is a mobile phone is used as an example. FIG. 10 is a block diagram of a partial structure when user equipment is a mobile phone according to an embodiment of the present invention. Referring to FIG. 10, the mobile phone may include components such as a radio frequency (Radio Frequency, RF) circuit 1110, a memory 1120, an input unit 1130, a display unit 1140, a sensor 1150, an audio frequency circuit 1160, a wireless fidelity (Wireless Fidelity, WiFi) module 1170, a processor 1180, and a power supply 1190. A person skilled in the art may understand that, the structure of the mobile phone shown in FIG. 10 does not constitute a limitation on the mobile phone, and the mobile phone may include more or fewer components than those shown in the figure, or combine some components, or have different component configurations.

The following describes all components of the mobile phone in detail with reference to FIG. 10.

The RF circuit 1110 may be configured to receive and send information, or receive and send a signal during a call. In particular, after receiving downlink information from a base station, the RF circuit 1110 sends the downlink information to the processor 1180 for processing. In addition, the RF circuit 1110 sends uplink data to the base station. Generally, the RF circuit includes but is not limited to an antenna, at least one amplifier, a transceiver, a coupler, a low noise amplifier (Low Noise Amplifier, LNA), a duplexer, and the like. In addition, the RF circuit 1110 may communicate with a network and another device through wireless communication. The wireless communication may use any communication standard or protocol, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), email, a short messaging service (Short Messaging Service, SMS), or the like.

The memory 1120 may be configured to store a software program and a module. By running the software program and the module that are stored in the memory 1120, the processor 1180 performs various function applications and data processing of the mobile phone. The memory 1120 may mainly include a program storage area and a data storage area. The program storage area may store an operating system, an application program required by at least one function (such as an audio play function or an image play function), and the like. The data storage area may store data (such as audio data or an address book) created according to use of the mobile phone, and the like. In addition, the memory 1120 may include a high-speed random access memory, or may include a nonvolatile memory, such as at least one magnetic disk storage device, a flash memory device, or another volatile solid-state storage device.

The input unit 1130 may be configured to: receive entered digits or character information, and generate key signal input related to user setting and function control of the mobile phone. Specifically, the input unit 1130 may include a touch panel 1131 and another input device 1132. The touch panel 1131, which is also referred to as a touchscreen, can collect a touch operation (for example, an operation of a user on the touch panel 1131 or near the touch panel 1131 by using any proper object or accessory such as a finger or a stylus) of the user on or near the touch panel 1131, and drive a corresponding connection apparatus according to a preset program. Optionally, the touch panel 1131 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into touch point coordinates, and sends the touch point coordinates to the processor 1180, and can receive and execute a command sent by the processor 1180. In addition, the touch panel 1131 may be implemented by using a plurality of types, such as a resistive type, a capacitive type, an infrared ray, and a surface acoustic wave. In addition to the touch panel 1131, the input unit 1130 may include the another input device 1132. Specifically, the another input device 1132 may include but is not limited to one or more of a physical keyboard, a function key (such as a volume control key or an on/off key), a trackball, a mouse, a joystick, and the like.

The display unit 1140 may be configured to display information entered by the user or information provided for the user, and various menus of the mobile phone. The display unit 1140 may include a display panel 1141. Optionally, the display panel 1141 may be configured in a form of a liquid crystal display (Liquid Crystal Display, LCD), an organic light-emitting diode (Organic Light-Emitting Diode, OLED), or the like. Further, the touch panel 1131 may cover the display panel 1141. When detecting a touch operation on or near the touch panel 1131, the touch panel 1131 transmits the touch operation to the processor 1180 to determine a type of a touch event, and then the processor 1180 provides corresponding visual output on the display panel 1141 according to the type of the touch event. In FIG. 10, the touch panel 1131 and the display panel 1141 are used as two independent components to implement input and input functions of the mobile phone. However, in some embodiments, the touch panel 1131 and the display panel 1141 may be integrated to implement the input and output functions of the mobile phone.

The mobile phone may further include at least one type of sensor 1150, such as a light sensor, a motion sensor, or another sensor. Specifically, the light sensor may include an ambient light sensor and a proximity sensor. The ambient light sensor may adjust luminance of the display panel 1141 based on brightness of ambient light, and the light sensor may turn off the display panel 1141 and/or backlight when the mobile phone approaches an ear. As one type of the motion sensor, an acceleration sensor may detect an acceleration value in each direction (generally three axes), and detect a value and a direction of gravity when the acceleration sensor is stationary, and may be applied to an application used for identifying a mobile phone posture (for example, screen switching between landscape and portrait modes, a related game, or magnetometer posture calibration), a function related to vibration identification (such as a pedometer or a knock), and the like. For other sensors such as a gyroscope, a barometer, a hygrometer, a thermometer, and an infrared sensor that may also be disposed on the mobile phone, details are not described herein.

The audio frequency circuit 1160, a speaker 1161, and a microphone 1162 may provide an audio interface between the user and the mobile phone. The audio frequency circuit 1160 may transmit, to the speaker 1161, an electrical signal converted from received audio data, and the speaker 1161 converts the electrical signal into a sound signal for output. In addition, the microphone 1162 converts a collected sound signal into an electrical signal, the audio frequency circuit 1160 receives the electrical signal, converts the electrical signal into audio data, and outputs the audio data to the processor 1180 for processing. Then, the audio data is sent to, for example, another mobile phone, by using the RF circuit 1110, or the audio data is output to the memory 1120 for further processing.

WiFi is a short-distance wireless transmission technology. The mobile phone may help, by using the WiFi module 1170, the user receive and send an email, browse a web page, access streaming media, and the like. The WiFi module 1170 provides wireless broadband Internet access for the user. Although the WiFi module 1170 is shown in FIG. 10, it may be understood that the WiFi module 1170 is not a mandatory component of the mobile phone, and may be omitted as required without changing the essence of the present invention.

The processor 1180 is a control center of the mobile phone, and uses various interfaces and lines to connect all parts of the entire mobile phone, and performs various functions of the mobile phone and data processing by running or executing the software program and/or the module stored in the memory 1120 and invoking data stored in the memory 1120, so as to perform overall monitoring on the mobile phone. Optionally, the processor 1180 may include one or more processing units. Preferably, an application processor and a modem processor may be integrated into the processor 1180. The application processor mainly processes an operating system, a user interface, an application program, and the like. The modem processor mainly processes wireless communication. It may be understood that the modem processor may not be integrated into the processor 1180.

The mobile phone further includes the power supply 1190 (such as a battery) that supplies power to each component. Preferably, the power supply may be logically connected to the processor 1180 by using a power management system, so as to implement functions such as charging management, discharging management, and power consumption management by using the power management system.

The mobile phone may further include a camera 1200. The camera may be a front-facing camera, or may be a rear-facing camera. Although not shown, the mobile phone may further include a Bluetooth module, a GPS module, and the like, and details are not described herein.

In this embodiment of the present invention, the processor 1180 included in the mobile phone may be configured to execute the foregoing method embodiments of the video optimization method, and implementation principles and technical effects thereof are similar, which are not repeatedly described herein.

Finally, it should be noted that the embodiments are only intended for describing the technical solutions of the present invention, but not for limiting the present invention. Although the present invention is described in detail with reference to the embodiments, a person of ordinary skill in the art should understand that they may still make modifications to the technical solutions described in the embodiments or make equivalent replacements to some or all technical features thereof. Therefore, the protection scope of the present invention shall be subject to the protection scope of the claims.

## Claims

1. A video optimization method, wherein the method comprises:
sending, by a network device, first indication information to user equipment (UE), wherein the first indication information is used to instruct the UE to send a video mean opinion score (MOS) of the UE to the network device, and the video MOS is used to represent a current video quality level; and
receiving, by the network device, the video MOS sent by the UE.

2. The method according to claim 1, wherein after the receiving, by the network device, the video MOS sent by the UE, the method further comprises:
controlling, by the network device based on the video MOS, a current network resource occupied by a video.

3. The method according to claim 1, wherein after the receiving, by the network device, the video MOS sent by the UE, the method further comprises:
sending, by the network device, minimization of drive tests (MDT) measurement control information to the UE; and
receiving, by the network device, an MDT measurement report sent by the UE.

4. The method according to any one of claims 1 to 3, wherein the video MOS comprises a video MOS value and/or a value of a video MOS parameter, and the video MOS parameter comprises at least one of a video resolution, a video bit rate, a video codec, a video codec profile, an initial buffering delay, and a stalling ratio.

5. The method according to claim 4, wherein the first indication information further comprises a reporting criterion parameter, and the reporting criterion parameter is used to indicate a manner of sending the video MOS to the network device by the UE.

6. The method according to claim 5, wherein when the reporting criterion parameter is a reporting cycle, the reporting criterion parameter is specifically used to instruct the UE to send the video MOS to the network device based on the reporting cycle.

7. The method according to claim 5, wherein when the reporting criterion parameter is a reporting threshold, the reporting criterion parameter is specifically used to instruct the UE to send the video MOS to the network device when the video MOS is less than the reporting threshold.

8. The method according to claim 5, wherein when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

9. The method according to any one of claims 1 to 8, wherein before the sending, by a network device, first indication information to user equipment (UE), the method further comprises:
receiving, by the network device, capability indication information sent by the UE, wherein the capability indication information is used to indicate to the network device that the UE has a capability of sending the video MOS to the network device.

10. A video optimization method, wherein the method comprises:
receiving, by user equipment (UE), first indication information sent by a network device, wherein the first indication information is used to instruct the UE to send a video mean opinion score (MOS) of the UE to the network device, and the video MOS is used to represent a current video quality level;
obtaining, by the UE, the video MOS of the UE based on the first indication information; and
sending, by the UE, the video MOS to the network device.

11. The method according to claim 10, wherein after the sending, by the UE, the video MOS to the network device, the method further comprises:
receiving, by the UE, minimization of drive tests (MDT) measurement control information sent by the network device;
obtaining, by the UE, an MDT measurement report based on the MDT measurement control information; and
sending, by the UE, the MDT measurement report to the network device.

12. The method according to claim 10 or 11, wherein the video MOS comprises a video MOS value and/or a value of a video MOS parameter, and the video MOS parameter comprises at least one of a video resolution, a video bit rate, a video codec, a video codec profile, an initial buffering delay, and a stalling ratio.

13. The method according to claim 12, wherein the first indication information further comprises a reporting criterion parameter, and the reporting criterion parameter is used to indicate a manner of sending the video MOS to the network device by the UE.

14. The method according to claim 13, wherein when the reporting criterion parameter is a reporting cycle, the reporting criterion parameter is specifically used to instruct the UE to send the video MOS to the network device based on the reporting cycle.

15. The method according to claim 13, wherein when the reporting criterion parameter is a reporting threshold, the reporting criterion parameter is specifically used to instruct the UE to send the video MOS to the network device when the video MOS is less than the reporting threshold.

16. The method according to claim 13, wherein when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

17. The method according to any one of claims 10 to 16, wherein before the receiving, by user equipment (UE), first indication information sent by a network device, the method further comprises:
sending, by the UE, capability indication information to the network device, wherein the capability indication information is used to indicate to the network device that the UE has a capability of sending the video MOS to the network device.

18. A network device, wherein the network device comprises:
a sending module, configured to send first indication information to user equipment (UE), wherein the first indication information is used to instruct the UE to send a video mean opinion score (MOS) of the UE to the network device, and the video MOS is used to represent a current video quality level; and
a receiving module, configured to receive the video MOS sent by the UE.

19. The network device according to claim 18, wherein the network device further comprises:
a control module, configured to: after the receiving module receives the video MOS sent by the UE, control, based on the video MOS, a current network resource occupied by a video.

20. The network device according to claim 18, wherein
the sending module is further configured to send minimization of drive tests (MDT) measurement control information to the UE after the receiving module receives the video MOS sent by the UE; and
the receiving module is further configured to receive an MDT measurement report sent by the UE.

21. The network device according to any one of claims 18 to 20, wherein the video MOS comprises a video MOS value and/or a value of a video MOS parameter, and the video MOS parameter comprises at least one of a video resolution, a video bit rate, a video codec, a video codec profile, an initial buffering delay, and a stalling ratio.

22. The network device according to claim 21, wherein the first indication information further comprises a reporting criterion parameter, and the reporting criterion parameter is used to indicate a manner of sending the video MOS to the network device by the UE.

23. The network device according to claim 22, wherein when the reporting criterion parameter is a reporting cycle, the reporting criterion parameter is specifically used to instruct the UE to send the video MOS to the network device based on the reporting cycle.

24. The network device according to claim 22, wherein when the reporting criterion parameter is a reporting threshold, the reporting criterion parameter is specifically used to instruct the UE to send the video MOS to the network device when the video MOS is less than the reporting threshold.

25. The network device according to claim 22, wherein when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

26. The network device according to any one of claims 18 to 25, wherein
the receiving module is further configured to: before the sending module sends the first indication information to the user equipment (UE), receive capability indication information sent by the UE, wherein the capability indication information is used to indicate to the network device that the UE has a capability of sending the video MOS to the network device.

27. User equipment (UE), wherein the UE comprises:
a receiving module, configured to receive first indication information sent by a network device, wherein the first indication information is used to instruct the UE to send a video mean opinion score (MOS) of the UE to the network device, and the video MOS is used to represent a current video quality level;
an obtaining module, configured to obtain the video MOS of the UE based on the first indication information received by the receiving module; and
a sending module, configured to send the video MOS obtained by the obtaining module to the network device.

28. The UE according to claim 27, wherein
the receiving module is further configured to: after the sending module sends the video MOS to the network device, receive minimization of drive tests (MDT) measurement control information sent by the network device;
the obtaining module is further configured to obtain an MDT measurement report based on the MDT measurement control information received by the receiving module; and
the sending module is further configured to send the MDT measurement report obtained by the obtaining module to the network device.

29. The UE according to claim 27 or 28, wherein the video MOS comprises a video MOS value and/or a value of a video MOS parameter, and the video MOS parameter comprises at least one of a video resolution, a video bit rate, a video codec, a video codec profile, an initial buffering delay, and a stalling ratio.

30. The UE according to claim 29, wherein the first indication information further comprises a reporting criterion parameter, and the reporting criterion parameter is used to indicate a manner of sending the video MOS to the network device by the UE.

31. The UE according to claim 30, wherein when the reporting criterion parameter is a reporting cycle, the reporting criterion parameter is specifically used to instruct the UE to send the video MOS to the network device based on the reporting cycle.

32. The UE according to claim 30, wherein when the reporting criterion parameter is a reporting threshold, the reporting criterion parameter is specifically used to instruct the UE to send the video MOS to the network device when the video MOS is less than the reporting threshold.

33. The UE according to claim 30, wherein when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

34. The UE according to claims 27 to 33, wherein
the sending module is further configured to send capability indication information to the network device before the receiving module receives the first indication information sent by the network device, wherein the capability indication information is used to indicate to the network device that the UE has a capability of sending the video MOS to the network device.

35. A network device, wherein the network device comprises:
a transmitter, configured to send first indication information to user equipment (UE), wherein the first indication information is used to instruct the UE to send a video mean opinion score (MOS) of the UE to the network device, and the video MOS is used to represent a current video quality level; and
a receiver, configured to receive the video MOS sent by the UE.

36. The network device according to claim 35, wherein the network device further comprises:
a processor, configured to: after the receiver receives the video MOS sent by the UE, control, based on the video MOS, a current network resource occupied by a video.

37. The network device according to claim 35, wherein
the transmitter is further configured to send minimization of drive tests (MDT) measurement control information to the UE after the receiver receives the video MOS sent by the UE; and
the receiver is further configured to receive an MDT measurement report sent by the UE.

38. The network device according to any one of claims 35 to 37, wherein the video MOS comprises a video MOS value and/or a value of a video MOS parameter, and the video MOS parameter comprises at least one of a video resolution, a video bit rate, a video codec, a video codec profile, an initial buffering delay, and a stalling ratio.

39. The network device according to claim 38, wherein the first indication information further comprises a reporting criterion parameter, and the reporting criterion parameter is used to indicate a manner of sending the video MOS to the network device by the UE.

40. The network device according to claim 39, wherein when the reporting criterion parameter is a reporting cycle, the reporting criterion parameter is specifically used to instruct the UE to send the video MOS to the network device based on the reporting cycle.

41. The network device according to claim 39, wherein when the reporting criterion parameter is a reporting threshold, the reporting criterion parameter is specifically used to instruct the UE to send the video MOS to the network device when the video MOS is less than the reporting threshold.

42. The network device according to claim 39, wherein when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

43. The network device according to any one of claims 35 to 42, wherein
the receiver is further configured to: before the transmitter sends the first indication information to the user equipment (UE), receive capability indication information sent by the UE, wherein the capability indication information is used to indicate to the network device that the UE has a capability of sending the video MOS to the network device.

44. User equipment (UE), wherein the UE comprises:
a receiver, configured to receive first indication information sent by a network device, wherein the first indication information is used to instruct the UE to send a video mean opinion score (MOS) of the UE to the network device, and the video MOS is used to represent a current video quality level;
a processor, configured to obtain the video MOS of the UE based on the first indication information received by the receiver; and
a transmitter, configured to send the video MOS obtained by the processor to the network device.

45. The UE according to claim 44, wherein
the receiver is further configured to: after the transmitter sends the video MOS to the network device, receive minimization of drive tests (MDT) measurement control information sent by the network device;
the processor is further configured to obtain an MDT measurement report based on the MDT measurement control information received by the receiver; and
the transmitter is further configured to send the MDT measurement report obtained by the processor to the network device.

46. The UE according to claim 44 or 45, wherein the video MOS comprises a video MOS value and/or a value of a video MOS parameter, and the video MOS parameter comprises at least one of a video resolution, a video bit rate, a video codec, a video codec profile, an initial buffering delay, and a stalling ratio.

47. The UE according to claim 46, wherein the first indication information further comprises a reporting criterion parameter, and the reporting criterion parameter is used to indicate a manner of sending the video MOS to the network device by the UE.

48. The UE according to claim 47, wherein when the reporting criterion parameter is a reporting cycle, the reporting criterion parameter is specifically used to instruct the UE to send the video MOS to the network device based on the reporting cycle.

49. The UE according to claim 47, wherein when the reporting criterion parameter is a reporting threshold, the reporting criterion parameter is specifically used to instruct the UE to send the video MOS to the network device when the video MOS is less than the reporting threshold.

50. The UE according to claim 47, wherein when the reporting criterion parameter is a reporting threshold and first duration, the reporting criterion parameter is specifically used to instruct the UE to send the video MOS to the network device when the video MOS is less than the reporting threshold and duration of a state in which the video MOS is less than the reporting threshold is greater than or equal to the first duration.

51. The UE according to any one of claims 44 to 50, wherein
the transmitter is further configured to send capability indication information to the network device before the receiver receives the first indication information sent by the network device, wherein the capability indication information is used to indicate to the network device that the UE has a capability of sending the video MOS to the network device.
